# EUROPÄISCHE PATENTANMELDUNG

(11) **EP 1 104 050 A1**
(43) Veröffentlichungstag der Anmeldung: **30.05.2001**
(21) Anmeldenummer: 99811096.9
(22) Anmeldetag: 28.11.1999
(51) Int. Cl.: H01R 13/03, H01R 39/02, H01M 4/00, H02K 13/00

(54) **Elektrisch leitendes Kontaktstück, Werkstoff für das Kontaktstück sowie Fahrzeug mit dem Kontaktstück**

(71) Anmelder: M.E. Steinemann & Co. AG, 7004 Chur (CH)
(72) Erfinder: Steinemann, Roger c/o Steinemann Carbon AG, 8031 Zürich (CH)
(74) Vertreter: Hammer, Bruno, Dr.

(57) **Zusammenfassung**

Das Kontaktstück besteht aus mindestens zwei Werkstoffen und besteht aus einem Teil aus einem ersten Werkstoff, der elektrisch leitend ist und eine poröse Struktur aufweist. Die poröse, matrixartige Struktur des Teils aus dem ersten Werkstoffs, ist wenigstens teilweise mit einem zweiten Werkstoff, z.B. einem Thermoplast, einem Duroplast, einem Kunstharz oder einem anderen Kunststoff durchsetzt. Der elektrisch leitende Teil, der die poröse Struktur aufweist, ist zudem mit Vorteil mit dem zweiten Werkstoff oder einem dritten Werkstoff weitgehend umhüllt, beispielsweise umspritzt und darin eingebettet.

## Beschreibung

Die Erfindung bezieht sich auf ein elektrisch leitendes Kontaktstück für die gleitende Stromübertragung zwischen zwei sich zueinander bewegenden Körpern nach dem Oberbegriff des unabhängigen Patentanspruchs 1. Weiter betrifft die Erfindung ein Fahrzeug mit dem Kontaktstück sowie die Verwendung eines besonderen elektrisch leitenden Werkstoffs für das Kontaktstück. Die Erfindung bezieht sich auch auf einen Elektromotor mit mindestens einem derartigen Kontaktstück.

Derartige Kontaktstücke, werden auch als Gleitstücke oder Schleifstücke bezeichnet und werden z.B. zwischen der Fahrleitung und dem Stromabnehmer von Elektrofahrzeugen, wie Trolleybussen, Lokomotiven, Strassenbahnen, aber auch bei Kranbahnen, Förder- und Verladebrücken verwendet. Solche entsprechend geformte Kontaktstücke werden aber auch in elektrischen Motoren zur Stromübertragung auf die Wicklung des Rotors verwendet. Bei diesen Motoren erfolgt die Übertragung von Strom vom Kontaktstück, also der sog. Bürste, die feststeht, auf den mit der Motorwelle drehenden Kommutator, bzw. Kollektor oder einen Schleifring.

Von einem guten Kontaktstück wird eine störungsfreie Stromübertragung zwischen den sich relativ zueinander bewegenden Oberflächen bei einer möglichst langen Lebensdauer verlangt. Diese Forderungen sind nicht leicht zu erfüllen und es hängt von den jeweiligen Gegebenheiten wie z.B. Stromstärke, Spannung, Zusammensetzung und Paarung von Werkstoff des Kontaktstücks und Werkstoff des Gegenstücks wie z.B. der Fahrleitung,
Relativgeschwindigkeit, Zusammensetzung der umgebenden Atmosphäre und gegebenenfalls Verlegungsart und Zustand des Fahrleitungsdrahtes ab, wie weit man sich einem Optimum der in ihrer Wirkung teilweise gegenläufigen betrieblichen Einflüsse und Anforderungen nähert. Darüber hinaus soll der Verschleiss von Kontaktstück und vor allem dem Fahrdraht der Fahrleitung möglichst gering sein. Ein Kontaktstück muss bei geringem Abrieb gute Gleiteigenschaften aufweisen.

In den vergangenen Jahren wurden die Geschwindigkeit und die Traktionsleistung der Fahrzeuge höher, was das Übertragen höherer Ströme und Leistung erfordert. Gleichzeitig werden Leichtstromabnehmer entwickelt und verwendet. Die Anpressdrücke der Stromabnehmer wurden eher verringert.

Um beispielsweise die Betriebssicherheit von Elektrofahrzeugen mit Gleichoder Wechselstrombetrieb zu gewährleisten, müssen Kontaktstücke u.a. kontaktsicher, mechanisch stabil, temperaturfest bis gegen 250°C, Korrosionsbeständig sein. Zudem sollen sie gute Notlaufeigenschaften haben. Die Stromübertragung muss bei geringem Kontaktdruck gewährleistet sein. Das Kontaktstück soll den Fahrdraht polieren und patinabildende Eigenschaften haben. Weiter soll das Kontaktstück eine hohe Abbrandfestigkeit aufweisen und keine Schmelzperlen bilden.

Der elektrische Kontaktwiderstand zur Fahrleitung und der Innenwiderstand des Kontaktstückes selbst sollen niedrig sein. Die Stromverteilung innerhalb des Kontaktstücks sollte gut, d.h. möglichst ausgeglichen sein. Insgesamt sollten die elektrischen Verluste im Kontaktstück niedrig sein.

Weiter müssen die Kontaktstücke, die Verschleissteile sind, einfach zu montieren sein. Während der möglichst langen Lebensdauer sollen Kontaktstücke wartungsfrei ihre Aufgabe erfüllen. Dazu trägt beispielsweise der gleichmässig Verschleiss der Kontaktstücke bei. Kontaktstücke müssen aber bei den verschiedensten und wechselnden klimatischen Bedingungen, bei Regen, Trockenheit, bei Hitze und Kälte, gegenüber Eis und Rauhreif auf der Fahrleitung verschleissarm sein.

Schliesslich sollen Kontaktstücke auch umweltfreundlich sein. Sie sollen u.a. geräuscharm gleiten, keine Störfunken oder Lichtbögen erzeugen. Der Verschleissstaub soll für die Gesundheit unbedenklich sein.

Es sind elektrische Kontaktstücke bekannt, die aus einem oder mehreren kohlenstoffhaltigen elektrisch leitenden Teil bestehen, der bzw. die in einem Kunstharz eingebettet sind. Andere bekannte Kontaktstücke sind aus Kohlenstoff gefertigt. Weiter sind Kontaktstücke bekannt, bei denen einer oder mehrere kohlenstoffhaltige Teile in einem Halter aus Metall, beispielsweise aus Leichtmetall wie Aluminium oder einer Aluminiumlegierung gefasst sind.

Aufgabe der Erfindung ist es, ein neues Kontaktstück zu schaffen, das den vielseitigen Anforderungen gerecht wird. Nach der Erfindung wird diese Aufgabe mit einem Kontaktstück gelöst, welches die Merkmale des kennzeichnenden Teils des unabhängigen Anspruchs 1 aufweist. Die abhängigen Ansprüche beziehen sich auf vorteilhafte Ausführungsformen der Erfindung. Der elektrisch leitende Werkstoff für das Kontaktstück hat die Merkmale des unabhängigen Anspruchs 9. Schliesslich weist das erfindungsgemässe Fahrzeug ein Kontaktstück nach der Erfindung auf.

Mit dem Verwenden eines elektrisch gut leitenden Werkstoffs für den ersten Teil und mindestens eines zweiten Werkstoffs der als Gleit- und Schmierstoff dient, sind die beiden Funktionen elektrisch Leiten, Strom führen und gutes, Material schonendes, möglichst abrieb- und verschleissarmes mechanisches Gleiten sowie das Bilden und/oder Erhalten einer sog. Patina am Gegenlaufwerkstoff, wie beispielsweise einem Fahrdraht oder einem Kollektor, primär einmal getrennt.

Der poröse elektrisch leitende Teil des Kontaktstücks ist beispielsweise ein aus einem Granulat von Bronzekügelchen gepresstes, bei etwa 800°C gesintertes Werkstück. Der so entstehende Werkstoff ist porös. Wenn im Zusammenhang mit der vorliegenden Erfindung von Kugeln oder Kügelchen die Rede ist, so soll damit lediglich und in erster Linie ausgedrückt sein, dass die Partikel des Granulats, wenn sie zu einem kompakten Teil verarbeitet werden, einen porösen Werkstoff bilden. Die Partikel brauchen dafür nicht exakt kugelförmig zu sein, sondern können z.B. eiförmig sein oder irgend eine Form haben, die es ermöglicht aus den Partikeln einen porösen Werkstoff herzustellen. An Stelle einer Matrix aus Kügelchen, kann auch ein Metallschaum oder ein Metallschwamm verwendet werden.

Die Grösse der Poren kann mit der Grösse der Partikel aus dem der Werkstoff hergestellt wird variiert werden. Aus Kügelchen mit einem Durchmesser von etwa 0.5 mm lässt sich beispielsweise ein Werkstoff herstellen, der so grosse Poren aufweist, dass er ohne weiteres mit einem Kunststoff wie etwa einem Duroplast, einem Thermoplast oder einem Kunstharz durchsetzt bzw. durchtränkt werden kann. Als Kunststoff sind beispielsweise aber nicht nur Polyamide, Polyimide, Polyphenylensulfid, Polytetrafluorethylen, perfluorierte und teilfluorierte Ethylen/Propylen-Copolymere, Polyarylamide und Polyetheretherketone und andererseits härtbare Duroplaste wie Phenolharze, Epoxidharze sowie Furanharze geeignet.

Als Werkstoff für die metallische Matrix könnte für gewisse Anwendungen auch Silber-Gold-Legierungen verwendet werden. Die Poren der metallischen Matrix könnten auch mit Duroplast durchsetzt sein. Wichtig ist, dass das Material geeignet ist, die Poren des metallischen, elektrisch gut leitenden, vorgeformten bzw. vorgefertigten Formteils mit dem Werkstoff zu durchsetzen und dass diese metallische Matrix auch mit diesem Werkstoff umhüllt, z.B. Umspritzt werden kann. Der Werkstoff, mit dem die Poren der Matrix durchsetzt und gefüllt werden, kann selbst auch elektrisch leitend sein, was aber nicht erforderlich ist, da die Metallmatrix selbst den Strom ausreichend gut leitet.

Wenn das Kontaktstück als Bürste für eine elektrische Maschine bestimmt ist wird dieses in der Regel eine kubische oder quaderartige Form, in einzelnen Fallen eine zylindrische haben.

Der z.B. aus den metallischen Kügelchen gepresste und gesinterte Werkstoff hat eine gute elektrische Leitfähigkeit. Bronze selbst hat zudem auch gute mechanische Gleiteigenschaften, welche durch einen Kunststoff mit guten Schmier- und Gleiteigenschaften welchem Festschmierstoffen beigegeben sind, mit welchem der gesinterte Bronze-Werkstoff durchsetzt ist. Mit Vorteil wird der leitende Werkstoff nicht nur mit dem Kunststoff durchsetzt, sondern gleich in diesen eingegossen und zum Kontaktstück vergossen. Der poröse Werkstoff mit der guten Leitfähigkeit, kann natürlich auch aus einem anderen Metall oder einer anderen Legierungen bestehen. So sind auch Kupfer, Messing, Aluminium, Aluminium-Magnesium-Legierungen, Silber, Blei, Zinn und Antimon und Legierungen davon geeignet. Als poröse Werkstoffe können auch Metallschäume verwendet werden.

Metallische Werkstoffe mit guter elektrischer Leitfähigkeit haben auch gute Wärmeleiteigenschaften. Damit ist unter normalen üblicherweise auftretenden Betriebsbedingungen dafür gesorgt, dass sich das Kontaktstück nicht zu sehr erwärmt.

Die Erfindung wird nachstehend an Hand der schematischen Zeichnungen, welche Ausführungsformen der Erfindung zeigen, näher erläutert.

### Es zeigen:

- Fig. 1: schematisch eine Aufsicht, ein Kontaktstück mit einem elektrisch leitenden Teil eines Kontaktstücks, der aus einem einzigen Stück besteht und der eine zahnartige Struktur aufweist deren Zähne quer zur Längsachse gekrümmt verlaufen;
- Fig. 2: das in A-A' geschnittene Kontaktstück von Fig. 1, in einer Seitenansicht;
- Fig. 3: das quer geschnittene Kontaktstück von Fig. 1, in Frontansicht;
- Fig. 4: schematisch ein Kontaktstück in einer Aufsicht, mit einem der elektrisch leitenden Teil aus einem einzigen Stück, und das eine zahnartige Struktur aufweist deren Zähne quer zur Längsachse gerade verlaufen;
- Fig. 5: in einer Aufsicht ein weiteres Kontaktstück mit mehreren zylindrischen, elektrischen leitenden Teilen die nicht zusammenhänaend sind:

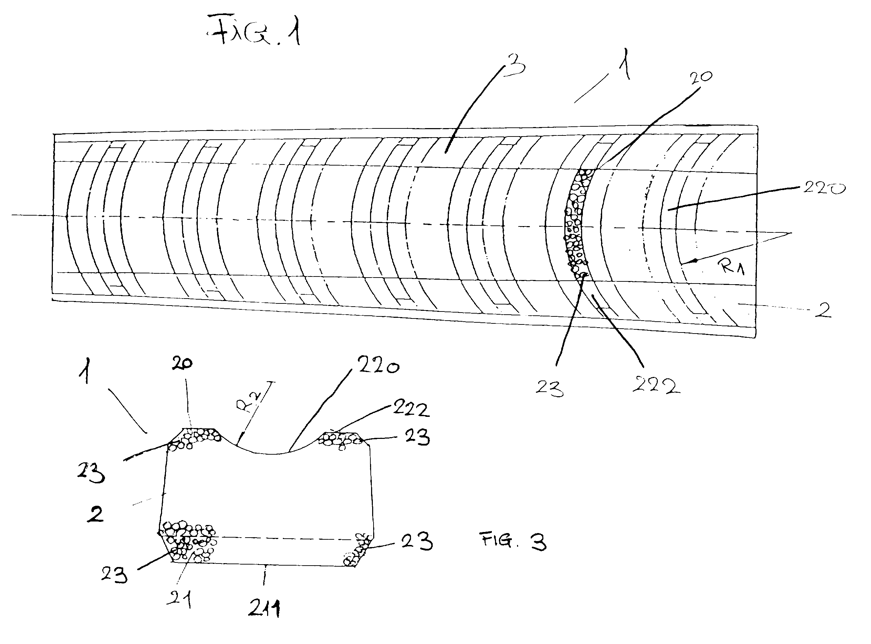

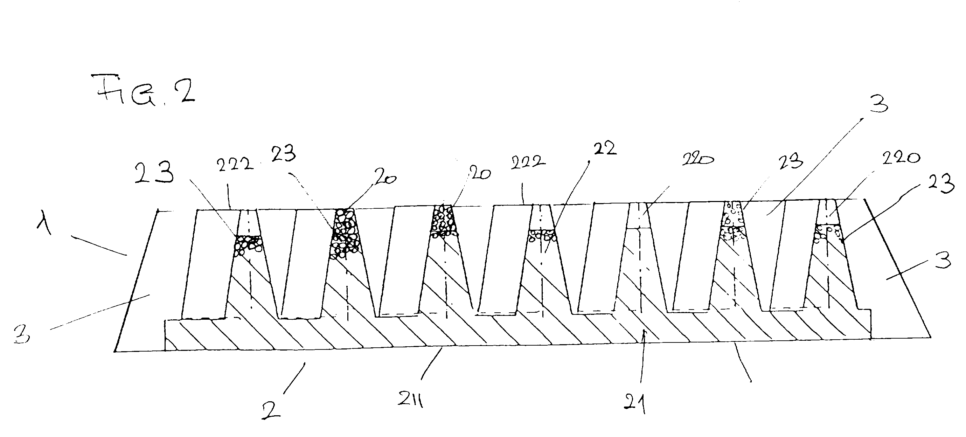

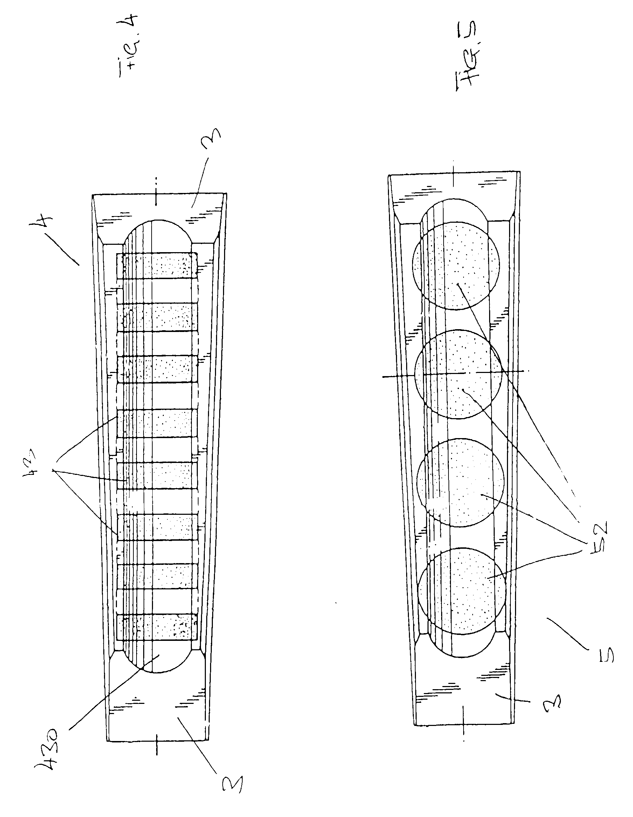

In den Fig. 1 bis Fig. 3 ist ein Kontaktstück 1 in der Aufsicht, in einer geschnittenen Seitenansicht (Fig. 2) und in einer Frontansicht (Fig. 3) gezeigt, dessen elektrisch leitender Teil 2 beispielsweise aus gepressten und gesinterten Bronzekügelchen 23 besteht. Die Bronzekügelchen 23 sind nur in kleinen Bereichen gezeichnet. Durch den Aufbau des elektrisch leitenden Teils 2 aus Kügelchen 23, ist der rohe, gesinterte Pressling porös. Die Poren 20 sollen so gross sein, dass sie leicht mit einem Füllstoff, der gute Schmiereigenschaften hat, beispielsweise einem Duroplast 3 mit Schmierstoffzusatz gefüllt werden können. Der mit dem Füllstoff durchsetzte elektrisch leitende Teil 2 wird dann z.B. in einer Giessmasse 3 eingebettet, wobei als Giessmasse mit Vorteil der gleiche Werkstoff wie der Füllstoff, also beispielsweise der Duroplast 3 verwendet wird. Der elektrisch leitende Teil 2, dessen Poren 20 mit dem Duroplast 3 und beispielsweise Schmiermittel durchsetzt und gefüllt sind, kann auch in einem anderen Werkstoff bzw. anderen Werkstoffen eingebettet, eingefasst oder eingegossen sein.

In dem in den Fig. 1 bis Fig. 3 gezeigten Kontaktstück 1, weist der leitende Teil 2 eine Grundplatte 21 und mehrere Zähnen 22. Zähne 22 und Grundplatte 21 bestehen aus den gepressten und gesinterten Bronzekügelchen 23, sind also ein poröser Körper 2 mit Poren 20. Die Zähne 22 sind gewölbt, weisen eine Krümmung mit dem Radius R₁ (Fig. 1 ) auf. Die Ende 222 der Zähne 22 weisen eine kreissegmentförmige Vertiefung 220 mit dem Radius R₂ auf. Diese Vertiefung 220 ist für die Aufnahme des Fahrdrahts einer Fahrleitung vorgesehen und vorzugsweise auf den Durchmesser des Fahrdrahts der Fahrleitung abgestimmt.

Der Rohling des Kontaktstücks 1, der schon weitgehend die endgültige Form des Kontaktstück haben kann, wird nach dem Eingiessen so bearbeitet, dass in den Vertiefungen 220 der Ende der Zähne 22 des elektrisch leitenden Teils 2 das Metall freiliegen um den elektrischen Kontakt mit z.B. einem Fahrdraht zu gewährleisten. Genau so sollte die Unterseite 211 der Grundplatte 21 blank liegen um den Kontakt mit dem Stromabnehmerschuh oder Endhorn auf dem das Kontaktstück montiert ist so zu gewährleisten, dass auch der Übergangswiderstand vom Kontaktstück zum Endhorn und damit die Verlustleistung im Stromabnehmer minimal ist.

Fig. 4 zeigt ein Kontaktstück 4, bei welchem der elektrisch leitende Teil 42 eine andere Form hat in der Aufsicht. Im wesentlichen besteht der Unterschied zu den in den Fig. 1 bis Fig. 3 dargestellten elektrisch leitenden Teil darin, dass die quer zur Längsrichtung angeordneten Zähne 43 nicht gebogen oder gekrümmt sind, sondern quer gerade verlaufen. Oben weist das Kontaktstück 4 eine kreissegmentförmige Rille 430 auf welche durch die Ende der Zähne 43 wie auch durch die Giessmasse aus einem Duroplast mit den Schmier- und Gleitstoffen verläuft. Auch diese Rille 430 ist zur Aufnahme des Fahrdrahts einer Fahrleitung bestimmt.

Fig. 5 zeigt eine weitere Ausführungsform eines Kontaktstücks 5. Der elektrisch leitende Teil besteht hier aus mehreren Zylindern 52. Diese Zylinder 52 können voneinander unabhängige leitende Teile sein oder eine gemeinsame Grundplatte 51 haben und im zweiten als Schmier- und Gleitmittel dienenden und z.B. solche Schmier- und Gleitmittel enthaltenden Werkstoff 3 eingebettet sein.

Die Struktur der metallischen Matrix von Kontaktstücken kann auch ganz anders gewählt werden. So könnten Zähne beispielsweise schuppenartig, fischgratförmig oder in Längsrichtung abwechselnd längs und quer angeordnete sein. Es ist auch eine Mischung verschiedener Anordnungen oder eine Mischung von Zylindern und Zähnen denkbar.

Es wäre auch ein Kontaktstück denkbar mit einer porösen Struktur möglich, bei welchem lediglich die poröse Struktur des ersten Werkstoffs mit dem zweiten Werkstoff durchsetzt ist, und bei welchem man nicht von einem eigentlichen Einbetten oder Eingiessen des ersten, elektrischen Teils in einem zweiten Werkstoff sprechen könnte.

Das Kontaktstück besteht aus mindestens zwei Werkstoffen und besteht aus einem Teil aus einem ersten Werkstoff, der elektrisch leitend ist und eine poröse Struktur aufweist. Die poröse, matrixartige Struktur des Teils aus dem ersten Werkstoffs, ist wenigstens teilweise mit einem zweiten Werkstoff, z.B. einem Thermoplast, einem Duroplast, einem Kunstharz oder einem anderen Kunststoff durchsetzt. Der elektrisch leitende Teil, der die poröse Struktur aufweist, ist zudem mit Vorteil mit dem zweiten Werkstoff oder einem dritten Werkstoff weitgehend umhüllt, beispielsweise umspritzt und darin eingebettet.

## Patentansprüche

1. Kontaktstück (1) aus mindestens zwei Werkstoffen, dadurch gekennzeichnet, dass ein Teil (2) des Kontaktstücks (1) aus einem ersten Werkstoff besteht, der elektrisch leitend ist und eine poröse Struktur (23) aufweist und die poröse Struktur (23) dieses Kontaktstücks (1) aus dem ersten Werkstoff wenigstens teilweise mit einem zweiten Werkstoff (3) durchsetzt ist und der Teil (2) der elektrisch leitend ist und die poröse Struktur (23) aufweist im zweiten Werkstoff (3) oder in einem dritten Werkstoff eingebettet ist.

2. Kontaktstück (1) nach Anspruch 1, bei welchem der erste Werkstoff (2) aus metallischen Kugeln gepresst und/oder gesintert ist, oder ein Metallschaum ist.

3. Kontaktstück (1) nach Anspruch 1 oder 2, bei welchem der zweite Werkstoff (3) Schmier- und/oder Gleitmittel enthält oder selbst gute Schmier- und/oder Gleiteigenschaften aufweist.

4. Kontaktstück (1) nach einem der Ansprüche 1 bis 3, bei welchem der erste Werkstoff (3) eine Bronze ist.

5. Kontaktstück (1) nach einem der Ansprüche 1 bis 4, bei welchem der zweite Werkstoff ein Kunststoff (3), wie Duroplast, Thermoplast, Kunstharz ist.

6. Kontaktstück (1) nach einem der Ansprüche 1 bis 5, bei welchem der erste Werkstoff (2) im zweiten Werkstoff (3) eingebettet ist.

7. Kontaktstück nach einem der Ansprüche 1 bis 6, bei welchem der Teil (2) aus dem ersten Werkstoff aus einem oder mehreren Teilen besteht.

8. Kontaktstück (1) nach einem der Ansprüche 1 bis 7, bei welchem der zweite Werkstoff (3) ebenfalls elektrisch leitend ist und/oder elektrisch leitende Komponenten aufweist.

9. Verwendung von gepresstem und/oder gesintertem metallischem Granulat, vorzugsweise kugelförmigem Granulat, oder von porösem Metallschaum als elektrisch leitender, erster Werkstoff für ein Kontaktstück (1) nach einem der Ansprüche 1 bis 8.

10. Fahrzeug mit mindestens einem Kontaktstück (1) nach einem der Ansprüche 1 bis 8.

11. Elektromotor mit mindestens einen Kontaktstück (1) nach einem der Ansprüche 1 bis 8 als Bürste für die Stromübertragung auf den Kommutator oder auf einen Schleifring.
